# EUROPÄISCHE PATENTSCHRIFT

(11) **EP 0 674 933 B1**
(45) Veröffentlichungstag und Bekanntmachung des Hinweises auf die Patenterteilung: **29.04.1998**
(21) Anmeldenummer: 94118476.4
(22) Anmeldetag: 24.11.1994
(51) Int. Cl.: B01D 39/16, D04H 1/46, D04H 1/54, B01D 39/08

(54) **Verfahren zur Herstellung eines Luftfiltermaterials**
Process for manufacturing air filter material
Procédé de fabrication de matière pour filtre à air

(30) Priorität: 05.03.1994 DE 4407344
(43) Veröffentlichungstag der Anmeldung: 04.10.1995
(73) Patentinhaber: Firma Carl Freudenberg, 69469 Weinheim (DE)
(72) Erfinder: Morweiser, Karl-Heinz, D-69488 Birkenau (DE); Stini, Dr. Harald, D-69488 Birkenau (DE); Veeser, Dr. Klaus, D-69469 Weinheim (DE)

(56) Entgegenhaltungen:
- EP-A- 0 246 811
- DATABASE WPI Section Ch, Week 8745, Derwent Publications Ltd., London, GB; Class A12, AN 87-317511 & JP-A-62 225 218 (TOYOBO K.K.) 3. Oktober 1987
- PATENT ABSTRACTS OF JAPAN vol. 16, no. 118 (C-0922) 25. März 1992 & JP-A-03 288 506 (CHISSO CORP.) 18. Dezember 1991 & DATABASE WPI Section Ch, Week 9206, Derwent Publications Ltd., London, GB; Class A04, AN 92-044826 & JP-A-3 288 506 (CHISSO CORP.) 18. Dezember 1991
- PATENT ABSTRACTS OF JAPAN vol. 14, no. 171 (C-0706) 3. April 1990 & JP-A-02 021 918 (CHISSO CORP.) 24. Januar 1990 & DATABASE WPI Section Ch, Week 9010, Derwent Publications Ltd., London, GB; Class A11, AN 90-070215 & JP-A-2 021 918 (CHISSO CORP.) 24. Januar 1990
- DATABASE WPI Section Ch, Week 7718, Derwent Publications Ltd., London, GB; Class A11, AN 77-31807Y & JP-A-52 037 875 (CHISSO CORP.) 24. März 1977
- DATABASE WPI Section Ch, Week 8416, Derwent Publications Ltd., London, GB; Class A04, AN 84-097825 & JP-A-59 043 171 (LION CORP.) 10. März 1984

## Beschreibung

Die Erfindung betrifft ein Verfahren zur Herstellung eines Luftfiltermaterials mit elektrostatischer Wirksamkeit, welches besteht aus einem Gemisch von (I) Polyolefinfasern und (II) Polyacrylnitrilfasern, wobei beide Fasern frei von Schmiermitteln und antistatischen Mitteln, also Avivagen, sind.

JP-A-3 288 506 (Abstract) lehrt die Verwendung konjugierter Polyolefinfasern in Vliesstoffiltern zum Zwecke des Erzielens einer ausreichenden Formstabilität, wenn diese Filter als dreidimensionale Formkörper ausgebildet werden sollen. Eine ausreichende Luftdurchlässigkeit bleibt durch diese Maßnahme erhalten.

Ein gattungsgemäßes Verfahren ist beschrieben in EP-A-0 246 811. Dabei geht man so vor, daß man (I) Polyolefinfasern nimmt und Schmiermittel und antistatische Mittel entfernt oder die Abwesenheit von Schmiermitteln und antistatischen Mitteln sicherstellt, daß man (II) Fasern eines Additionspolymers, umfassend ein oder mehrere mit Halogen oder Cyan substituierte Polyolefine sowie beispielsweise Acrylnitril-Einheiten, nimmt, Schmiermittel und antistatische Mittel von den Fasern (II) entfernt und anschließend die Fasern (I) und (II) vermischt. Damit soll ein elektrostatisch wirksames Luftfiltermaterial erhalten werden, welches bei hoher Filtrationsleistung geringe Materialkosten verursacht, durchfließender Luft nur geringen Widerstand entgegensetzt und nicht entflammbar ist. Das Luftfiltermaterial soll beispielsweise zum Einsatz in Staubschutz-Helmen und -Masken geeignet sein.

Wesentlich bei dieser bekannten Ausgestaltung ist, daß die Fasern vor dem Zusammenmischen jeweils gereinigt werden, wobei "reinigen" verstanden werden soll in dem Sinne, daß sie keine Beschichtung mit Schmiermitteln und antistatischen Mitteln aufweisen dürfen. Diese Reinigung erfolgt beispielsweise durch Abspülen mit einem nicht-ionischen Detergens, mit Alkali oder Lösungsmittel; jeweils mit anschließendem Spülvorgang.

Das entstehende Luftfiltermaterial erfüllt die in der Patentschrift genannten technologischen Anforderungen, ist jedoch mit dem Nachteil behaftet, daß seine Konfektionierbarkeit eingeschränkt ist: Es kann nur, z.B. zu anatomisch geformten Atemmasken, formstabil hergestellt werden, wenn es mit einer zusätzlichen, versteifenden Verstärkungslage versehen wird.

EP-A-0 246 811 lehrt nämlich, die Vliese "leicht" zu nadeln bei 25 Einstchen/cm. Zur Herstellung steiferer oder dichterer Vliesstoffe wird lediglich empfohlen, stärker zu vernadeln. Diese Maßnahme führt jedoch in vielen Fällen nicht zu der gewünschten Steifigkeit, wie sie durch Verstärkungslagen erreicht wird. Diese jedoch erfordern stets einen zusätzlichen Materialeinsatz und erhöhen auch den Durchströmwiderstand erheblich.

Aufgabe der vorliegenden Erfindung ist es, das gattungsgemäße Verfahren so zu optimieren, daß es ohne Einbußen an den bisher erreichten filtertechnischen Eigenschaften und ohne die Notwendigkeit einer zusätzlichen Verstärkungslage zu einem formstabilen Luftfilter führt, wie es beispielsweise für Atemmasken, jedoch auch unter Umständen für den Einbau in andere luftfördernde Geräte, notwendig ist.

Die Aufgabe wird gelöst durch die kennzeichnenden Merkmale des ersten Verfahrensanspruchs. Vorteilhafte Ausgestaltungen sind durch die jeweiligen Unteransprüche gekennzeichnet.

Mit der erfindungsgemäßen Verfahrensweise zur Herstellung des Luftfilters aus einem Gemisch, vorzugsweise in dem Verhältnis von Faser (I) zu Faser (II) von 30:70 bis 80:20, bezogen auf eine Oberfläche des Luftfiltermaterials, wobei die Fasern (I) durch Polypropylen/Polyethylen - Kern/Mantel- oder -Seite/Seite-Fasern und die Fasern (II) durch halogenfreies Polyacrylnitril gebildet sind, wird überraschenderweise ein sogar tiefziehfähiges, in jedem Falle aber formstabiles Luftfiltermaterial erhalten.

Unter "formstabil" soll hier verstanden werden, daß die das Filtermaterial bildende Fläche einer Verbiegung durch äußere Kräfte einen möglichst hohen Widerstand entgegensetzt.

Entgegen dem einleitend erwähnten Stand der Technik muß beim Herstellungsverfahren dabei so vorgegangen werden, daß man bereits vor dem Waschen im oben erwähnten Sinne die Fasern miteinander mischt, erst dann wäscht und anschließend trocknet.

Die anschließende Vliesbildung erfolgt durch Kardieren, woran sich zur Verfestigung das Nadeln anschließt. Sodann werden die Heterofilfasern thermisch aktiviert. Das Vlies erfährt dadurch die nötige Versteifung zu einem Vliesstoff, eventuell bei gleichzeitiger Verformung unter Druck.

Letzterer Vorgang ist in der Technik allgemein bekannt: Dabei erweicht in jedem Fall die niedriger schmelzende Komponente der Heterofilamente, das Polyethylen.

Beim Prägen, Stanzen oder Schweißen in einer Form oder beim Tiefziehen können besonders stark verformte, stabile Filter erhalten werden.

Überraschenderweise folgt aus der erfindungsgemäßen Auswahl der Faserwerkstoff-Paarung (I) mit (II) auch eine bisher nicht erreichte Stabilität der beim Kardieren aufgebrachten elektrostatischen Ladung: Eine Versteifung von Faservliesstoffen durch thermoplastische Bindefasern führte bisher bei der thermischen Behandlung zu einem drastischen Abbau der elektrostatischen Ladung auf den Fasern, so daß nach der Konfektionierung diese Eigenschaft fast gänzlich verloren ging. Dies ist bei der vorliegenden Erfindung nicht mehr zu beobachten.

Die eingesetzten Fasern (I) und (II) sollen vorzugsweise dünner als 100 µm sein. Die Stapellänge der Fasern beträgt vorzugsweise 40 bis 100 mm. Damit liegen die gleichen Bedingungen vor, wie sie bereits im Stand der Technik gebräuchlich sind.

Ein weiterer Vorteil der Erfindung ist, daß nicht so großer Wert auf die Verschmutzungsgefahr der Fasern beim Mischen gelegt werden muß, wie dies gemäß EP-A-0 246 811 als unbedingt erforderlich herausgestellt ist. Dort werden gewaschene Fasern gemischt, welche nicht mehr verschmutzt sein dürfen, während die Wäsche erfindungsgemäß anschließend erfolgt. Damit wird ein wesentlicher Beitrag zur Vereinfachung des Verfahrensablaufs erzielt.

Es ist möglich, das Luftfiltermaterial nicht nur allein, sondern auch als wirksamen, filternden Bestandteil eines Laminats aus mehreren Flächengebilden zu verwenden. So kann beispielsweise ein rein mechanisch verstärkend wirkender Vliesstoff oder ein Gewebe mit dem Luftfiltermaterial vernadelt sein.

Das Filtermaterial kann überwiegend dort eingesetzt werden, wo feste und flüssige Aerosole elektrostatisch abgefangen werden müssen. Seine Tiefziehfähigkeit erlaubt den Einsatz nicht nur für anatomisch geformte Filter für den Atemschutz von Menschen, sondern auch die Verwendung als vorgeformtes Bauteil in beispielsweise engen und/oder gekrümmten Einbauräumen von lufttechnischen Anlagen, wie Klimageräten z.B. in Kraftfahrzeugen, in Staubsaugern oder Kühlgebläsen.

### Beispiele:

1. Filtertechnische Messungen an erfindungsgemäß hergestellten Luftfiltern in Form von tiefgezogenen Masken wurden nach EN 143, Abschnitte 6.3 und 6.4.1, durchgeführt:

| Druckverlust (Pa) | Durchlaßgrad (%) |
|---|---|
| 15 | 11,9 |
| 23 | 4,9 |
| 44 | 2,4 |
| 66 | 0,3 |

2. Entsprechend ergaben erfindungsgemäß hergestellte Filterflächenwaren folgende Daten:

| Druckverlust (Pa) | Durchlaßgrad (%) |
|---|---|
| 4 | 3,5 |
| 11 | 1,0 |
| 16 | 0,4 |

Die Entflammbarkeit wurde nach EN 149, Abschnitt 5.5, geprüft und bestanden.

## Patentansprüche

1. Verfahren zur Herstellung eines Luftfiltermaterials mit elektrostatischer Wirksamkeit, dessen Fasern durch Waschen von Schmiermitteln und antistatischen Mitteln befreit werden, wobei man ein Gemisch von (I) Polyethylen- und Polypropylen-Fasern und (II) halogenfreien Polyacrylnitrilfasern verwendet und wobei man das ein Vlies bildende Fasergemisch nadelt, dadurch gekennzeichnet, daß man als (I) Heterofilfasern des Kern/Mantel- oder Seite/Seite-Typs aus Polypropylen/Polyethylen verwendet, daß man die Fasern (I) und (II) vor dem Waschen miteinander vermischt in einem Gewichtsverhältnis von Faser (I) zu Faser (II) von 30:70 bis 80:20, daß man anschließend Schmiermittel und antistatische Mittel von den Fasern (I) und den Fasern (II) durch Waschen entfernt, das gewaschene Fasermaterial trocknet, durch Kardieren ein Vlies bildet, dieses Vlies dann nadelt und es anschließend durch thermische Aktivierung der Heterofilfasern versteift und gegebenenfalls verformt.

2. Verfahren nach Anspruch 1, dadurch gekennzeichnet, daß man Fasern (I) und (II) dünner als 100 µm verwendet.

3. Verfahren nach Anspruch 1 oder 2, dadurch gekennzeichnet, daß man Stapellängen für die Fasern (I) und (II) von 30 bis 200 mm wählt.

4. Verfahren zur Herstellung eines Luftfiltermaterials nach einem der Ansprüche 1 bis 3, dadurch gekennzeichnet, daß es im letzten Verfahrensschritt in Form geprägt, gestanzt, geschweißt oder tiefgezogen wird.

5. Verfahren zur Herstellung eines Luftfiltermaterials nach einem der vorangehenden Ansprüche, dadurch gekennzeichnet, daß man es als wirksamen, filternden Bestandteil eines Laminats aus mehreren Flächen gebilden einsetzt.

## Claims

1. A process for manufacturing an electrostatically active air filter material whose fibres are washed to remove lubricants and antistats, by using a blend of (I) polyethylene and polypropylene fibres and (II) halogen-free polyacrylonitrile fibres and by needling a web formed from the fibre blend, characterized in that polypropylene/polyethylene heterofil fibres of the core/sheath or side-by-side type are used as (I), in that said fibres (I) and (II) are blended with each other in a weight ratio of fibre (I) to fibre (II) within the range from 30:70 to 80:20 prior to washing, in that lubricants and antistats are then removed from said fibres (I) and said fibres (II) by washing, the washed fibre material is dried, carded to form a web, and this web is then needled and by thermal activation of the heterofil fibres is subsequently stiffened and, if desired, shaped.

2. A process according to claim 1, characterized in that said fibres (I) and (II) are less than 100 µm in thickness.

3. A process according to claim 1 or 2, characterized in that said fibres (I) and (II) have staple lengths within the range from 30 to 200 mm.

4. A process for manufacturing an air filter material according to any one of claims 1 to 3, characterized in that it is shaped in the last step by embossing, stamping, welding or thermoforming.

5. A process for manufacturing an air filter material according to any one of the preceding claims, characterized in that the air filter material is used as active, filtering constituent of a laminate composed of a plurality of sheetlike structures.

## Revendications

1. Procédé de fabrication d'un matériau pour filtre à air avec une activité électrostatique, dont les fibres sont débarrassées d'agents lubrifiants et d'agents antistatiques par lavage, dans lequel on utilise un mélange de (I) fibres de polyéthylène et de polypropylène et de (II) fibres de polyacyrlonitrile exempt d'halogènes et dans lequel on aiguillette un mélange de fibres formant un non-tissé, caractérisé en ce qu'on utilise à titre de (I) des fibres hétérofilamentaires de type âme/gaine ou de type face/face constituées de polypropylène/polyéthylène, en ce qu'on mélange les fibres (I) et (II) avant le lavage en un rapport massique de la fibre (I) à la fibre (II) de 30 : 70 à 80 : 20, en ce qu'on élimine ensuite par lavage les agents lubrifiants et les agents antistatiques des fibres (I) et des fibres (II), en ce qu'on sèche le matériau fibreux lavé, en ce qu'on forme un non-tissé par cardage, en ce qu'on aiguillette ensuite le non-tissé et en ce qu'on le rigidifie et le met éventuellement en forme par la suite par activation thermique des fibres hétérofilamentaires.

2. Procédé selon la revendication 1, caractérisé en ce qu'on utilise des fibres (I) et (II) d'une épaisseur inférieure à 100 µm.

3. Procédé selon la revendication 1 ou 2, caractérisé en ce qu'on choisit des longueurs de fibre pour les fibres (1) et (II) de 30 à 200 mm.

4. Procédé de fabrication d'un matériau pour filtre à air selon l'une des revendications 1 à 3, caractérisé en ce qu'on effectue une mise en forme, à la dernière étape du procédé, par estampage, par découpage, par soudage ou par emboutissage.

5. Procédé de fabrication d'un matériau pour filtre à air selon l'une des revendications précédentes, caractérisé en ce qu'on l'utilise à titre de constituant actif et filtrant d'un stratifié constitué de plusieurs structures planes.
